# FASCICULE DE BREVET EUROPEEN

(11) **EP 2 397 361 B1**
(45) Date de publication et mention de la délivrance du brevet: **14.11.2012**
(21) Numéro de dépôt: 11167394.3
(22) Date de dépôt: 25.05.2011
(51) Int. Cl.: B60N 2/20, B60N 2/30, B60N 2/36

(54) **Tablette pour masquer une cavité a l'arrière d'un siège d'un véhicule automobile**
Platte zum Abdecken eines Hohlraums auf der Rückseite eines Kraftfahrzeugsitzes
Shelf for closing a cavity behind a seat of an automotive vehicle

(30) Priorité: 21.06.2010 FR 1054899
(43) Date de publication de la demande: 21.12.2011
(73) Titulaire: Peugeot Citroën Automobiles SA, 78140 Vélizy-Villacoublay (FR)
(72) Inventeur: Combeau, Frédéric, 25750 Désandans (FR); Thiel, Marc, 25400 Exincourt (FR)

(56) Documents cités:
- DE-A1- 3 826 959
- DE-A1-102008 025 333
- DE-C- 928 506
- FR-A- 1 457 052
- FR-A1- 2 920 714
- US-A- 3 011 822
- US-A1- 2002 140 270

## Description

La présente invention concerne une tablette pour masquer une cavité à l'arrière d'un siège d'un véhicule automobile pour assurer la continuité du plancher de coffre, la tablette étant positionnée contre le dossier du siège pendant sa non-utilisation.

Dans les voitures avec trois rangées de sièges, il est possible d'enlever les sièges de la troisième rangée afin d'augmenter le volume du coffre. Dans ce cas, le plancher du coffre n'est pas plat car il existe derrière les sièges de la deuxième rangée une cavité dite "cave à pied" pour les passagers de la troisième rangée.

Il est connu dans l'état de la technique de prévoir des panneaux articulés sur les dossiers des sièges qui se trouvent devant cette cave à pied, qui peuvent être rabattus afin de fermer cette cavité et de rendre le plancher plat.

Ainsi, le brevet allemand DE 928 506C (correspondant au préambule de la revendication 1) décrit un siège de seconde rangée constitué d'une tablette arrière qui se déplie vers l'arrière lorsque le siège est replié. Cette tablette est en deux parties. Ces deux parties sont séparées par une liaison pivot. Une fois dépliée, la tablette vient s'attacher sur un plot.

Le brevet américain US 3011822 décrit une banquette arrière d'un véhicule automobile. Lorsque la banquette est rabattue, il n'y a plus d'espace entre le plancher du coffre et le bas du dossier de siège et on obtient un plancher de coffre plat. L'espace est comblé grâce à une plaque qui est constituée de trois pivots et fixée sur le dossier du siège mais aussi sur le plancher du coffre.

Ces documents de l'art antérieur reprennent tous l'idée de recouvrir l'espace situé derrière un siège pour avoir un plancher plat lorsque ces sièges ne sont pas utilisés. Le cas où les sièges de seconde rangée seraient ni utilisés, ni rabattus vers l'avant n'est pas prévu dans ces solutions selon l'état de la technique.

C'est l'objet de la présente invention de proposer une tablette pour masquer une cavité à l'arrière d'un siège d'un véhicule automobile avec laquelle on peut recouvrir l'espace situé derrière le siège pour obtenir un plancher de coffre plat soit dans le cas où les sièges sont utilisés, soit quand les sièges sont repliés vers l'avant.

La présente invention a pour objet une tablette de masquage pour masquer une cavité à l'arrière d'un siège d'un véhicule automobile pour assurer la continuité du plancher du coffre, positionnée contre le dossier du siège pendant sa non-utilisation, ladite tablette comprenant un volet supérieur qui est lié à un volet inférieur par le biais d'une première charnière formant un axe horizontal, le volet inférieur étant lié au carter du siège également par une deuxième charnière formant un second axe horizontal, le volet inférieur étant immobilisé contre le dossier du siège par des moyens de retenue lorsque le siège est en position d'utilisation et étant libéré lorsque le siège est en position escamotée, les moyens de retenue du volet inférieur comprennent au moins un lien souple, non extensible, fixé par une extrémité au carter du siège, passant par un trou dans la paroi arrière à hauteur du volet inférieur à travers le dossier du siège et étant fixé avec par son autre extrémité au volet inférieur.

Avantageusement, le lien est un câble ou un fil et l'emplacement de sa fixation sur le carter est choisi de telle sorte que lorsque le dossier du siège est escamoté, sa longueur est suffisamment grande pour permettre au volet inférieur de pivoter autour de l'axe de sa deuxième charnière jusqu'à ce qu'il atteigne une position où il repose sur la paroi arrière du dossier.

De préférence, le carter du dossier comprend deux carters de glissière mobile, chacun de ces deux carters étant pourvu d'un moyen de retenue du volet inférieur.

De préférence, les charnières sont constituées par des bandes en textile.

Avantageusement, les volets sont recouverts par une moquette, formant elle-même les charnières.

De préférence, le volet supérieur est fixé en position de non-utilisation sur le dossier du siège par une gâche.

Selon un mode de réalisation préféré, le au moins un lien souple est fixé près du bord supérieur du volet inférieur à celui-ci et une rainure partant du lieu de fixation et s'étendant jusqu'au bord opposé du volet inférieur est prévue pour loger une partie du lien lorsque les deux volets sont rabaissés.

De préférence, la hauteur du volet inférieur est déterminée afin que la première charnière repose sur une extrémité du dossier lorsqu'il est escamoté.

Avantageusement la longueur du volet inférieur est déterminée afin que le volet supérieur repose à plat sur le plancher du coffre.

L'invention et ses avantages seront mieux compris à la lecture de la description qui va suivre donnée uniquement à titre d'exemple et faite en se référant aux dessins annexés, sur lesquels:
- Fig. 1: montre un siège d'un véhicule automobile avec une tablette de masquage selon l'invention;
- Fig.2: montre un détail du carter et du dossier du siège avec des moyens de retenue du volet inférieur de la tablette de masquage;
- Fig.3: montre la tablette de masquage rabattue lorsque le siège est utilisé;
- Fig.4: montre une vue de côté d'un siège d'un véhicule avec la tablette de masquage rabattue;
- Fig. 5: montre la tablette de masquage rabattue lorsque le siège est escamoté; et
- Fig.6: montre une vue de côté du siège escamoté avec la tablette de masquage rabattue.

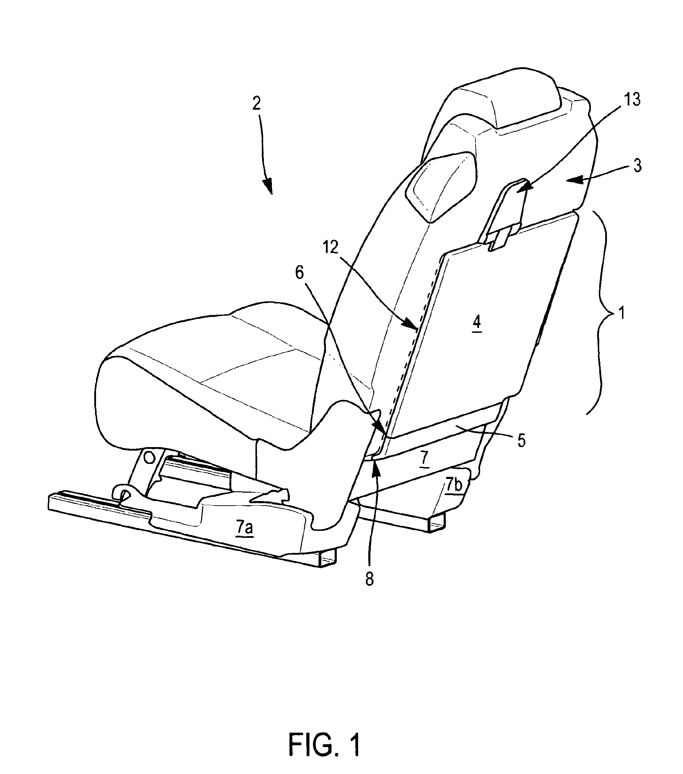

Fig.1 montre en perspective une vue arrière d'un siège 2 d'un véhicule automobile. Ce siège peut être installé à la deuxième rangée de sièges d'un véhicule ayant trois rangées de sièges. Si l'on enlève la troisième rangée de sièges pour agrandir le coffre, le plancher du coffre n'est pas entièrement plat, compte tenu de la cave à pied située devant la troisième rangée de sièges. La tablette de masquage 1 articulée sur le dossier 3 du siège 2 est pourvue pour fermer cette cavité au niveau du plancher du coffre pour rendre ce dernier plat jusqu'au bord arrière du siège 2. Le siège 2 est monté par l'intermédiaire de deux carters de glissière 7a, 7b sur les glissières et son dossier 3 est repliable vers l'avant pour faciliter l'accès des passagers ou pour agrandir le coffre. La tablette de masquage 1 comporte un volet supérieur 4 et un volet inférieur 5, qui sont reliés entre eux par une charnière 6 formant un premier axe horizontal, de préférence en textile. Cette charnière en textile peut être une simple bande de textile. De préférence, toute la surface de la tablette 1 montrée dans la position rabattue vers le haut est recouverte par une moquette 12. Ainsi la moquette 12 joue en même temps le rôle d'une charnière 6 en textile.

Le volet inférieur 5 est articulé également par l'intermédiaire d'une deuxième charnière horizontale 8 en textile sur la partie basse du dossier 3 et/ou du carter 7, formant un second axe horizontal. La tablette 1 est retenue sur le dossier 3 par une gâche 13. La gâche 13 peut être verrouillée ou déverrouillée manuellement ou peut comporter un ressort d'actionnement.

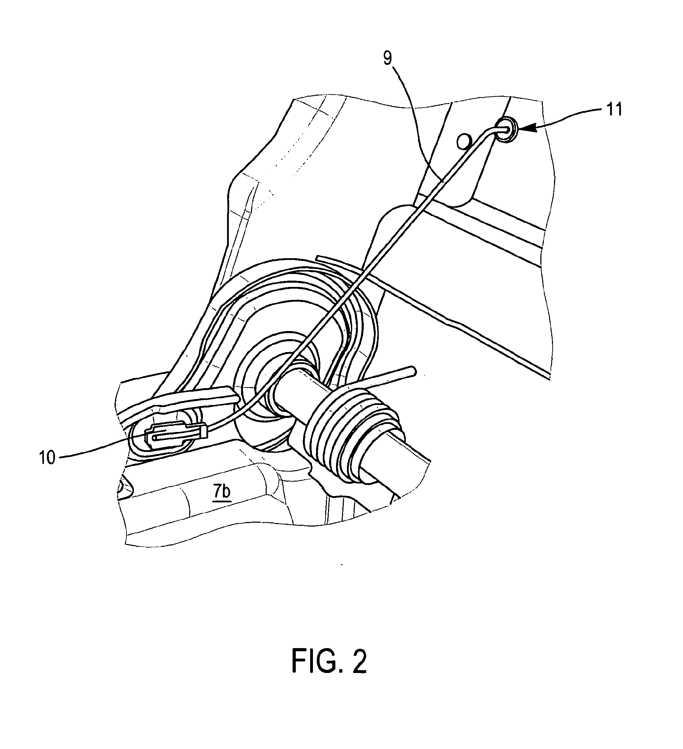

Fig.2 montre un détail d'une vue en perspective du châssis du siège 2 au niveau du carter de glissière 7b et le cadre du dossier 3 avec son articulation. Dans cette vue, les coussins de siège et de dossier sont enlevés. Un lien 9 sous forme d'un fil souple non extensible est prévu entre le carter de glissière 7b où il est fixé par une fixation rapide 10 et le volet inférieur (non visible Fig. 2) qui se trouve sur la face arrière du dossier 3 au niveau d'un trou de passage 11 pour le lien 9.

Dans la position d'utilisation du siège 2, le lien 9 retient le volet inférieur 5 fortement sur le dossier 3. Quand le dossier est escamoté vers l'avant la longueur du lien 9 fait que le volet inférieur 5 n'est plus retenu fermement contre le dossier 3 et le volet inférieur peut pivoter autour de l'axe de sa charnière 8 jusqu'à une position où il touche la partie du fond du dossier 3. En même temps, le volet supérieur 4 est rabattu pour fermer la cave à pied vers le haut au niveau du plancher du coffre.

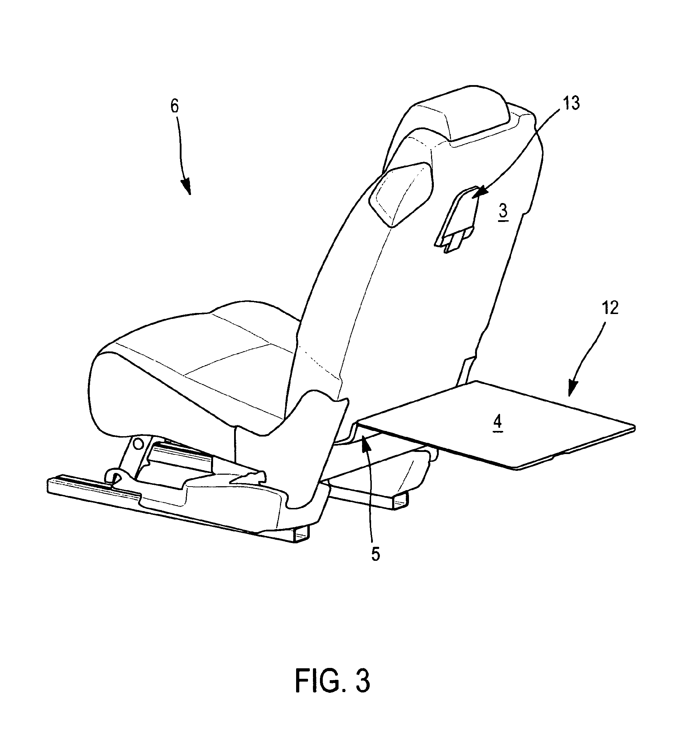

Fig.3 montre une vue en perspective arrière du siège 2 avec le dossier en position d'utilisation du siège 2. Dans cette position, le volet inférieur 5 est donc fermement maintenu contre le dossier 3 par l'intermédiaire du lien 9 et seul le volet supérieur 4 est rabattable. Il est rabattu en appuyant sur la gâche 13 afin de vaincre la force de son ressort et ainsi de provoquer l'ouverture.

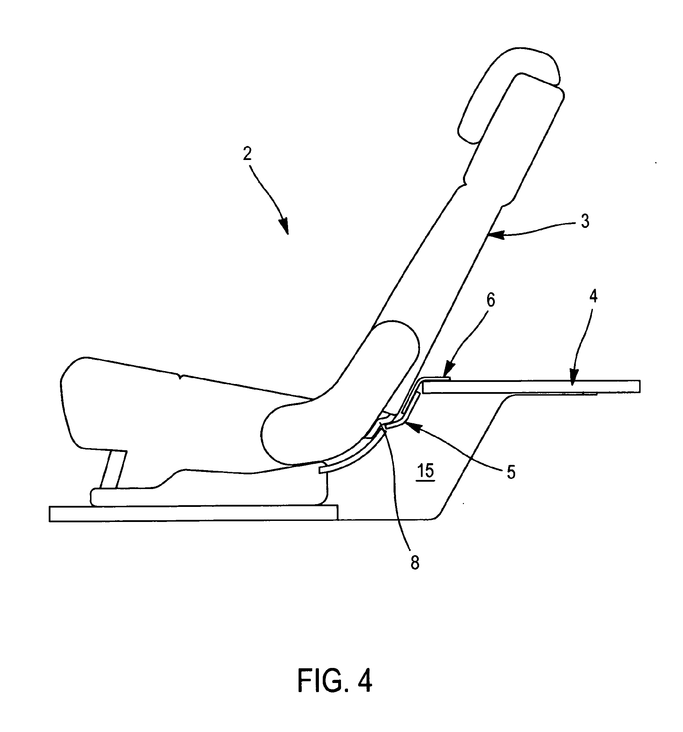

Fig.4 montre le siège 2 de côté avec la cave à pied 15 derrière le siège 2 recouvert par le volet supérieur 4. Le volet supérieur 4 repose avec sa partie supérieure (ou dans sa position couchée, sa partie arrière) sur le plancher du coffre et sa longueur est déterminée afin d'assurer ainsi la continuité du plancher du coffre jusqu'au dossier du siège 2.

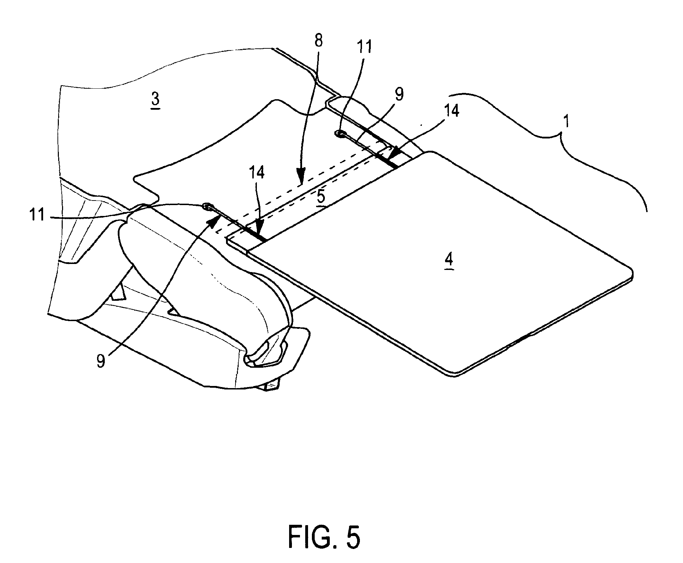

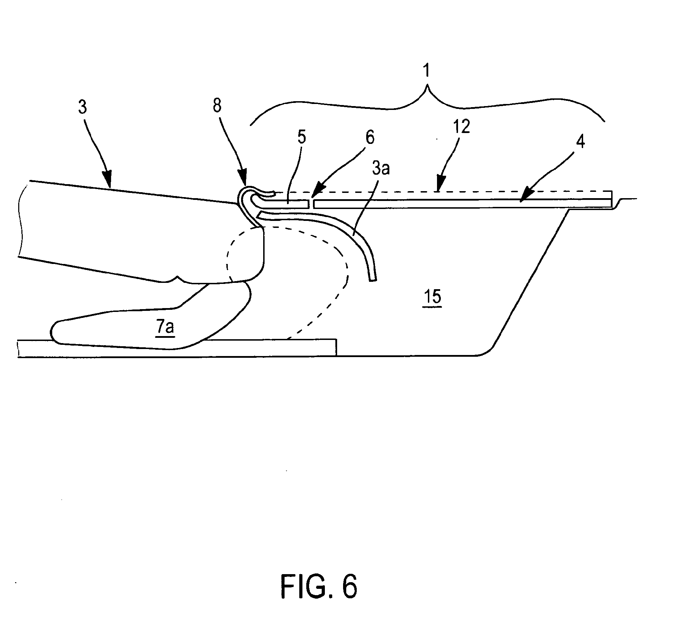

Fig.5 montre une vue arrière en perspective du siège 2 avec son dossier 3 escamoté vers l'avant et la tablette de masquage 1 entièrement rabattue vers l'arrière. Les liens 9, prévus des deux côtés du dossier, donnent dans cette position au volet inférieur la liberté de pivoter autour de l'axe de sa charnière 8 vers l'arrière. Ainsi, la tablette de masquage 1 est rallongée par rapport à sa position montrée Fig. 4 d'une distance qui correspond à la hauteur du volet inférieur 5. Ceci est plus visible sur Fig.6 qui montre le siège 2 avec son dossier 3 escamoté vers l'avant de côté. Dans cette position, comme on le voit bien Fig.6, l'axe de l'articulation de la charnière 8 est avancé vers l'avant du véhicule avec le dossier 3 escamoté. Ainsi, la longueur dans la direction longitudinale du véhicule de la tablette de masquage 1 doit être plus grande aussi afin de pouvoir recouvrir la cave à pied 15 et afin de pouvoir reposer avec sa partie arrière sur le bord du plancher du coffre.

La hauteur du volet inférieur 5 est déterminée aussi afin que la charnière 6 située entre le volet supérieur et le volet inférieur repose dans cette position sur une extrémité inférieure 3a du dossier 3. Ainsi, la tablette pour masquer la cavité ne peut pas être repliée à ce niveau-là quand le coffre est chargé. Afin de le protéger ce lien 9 qui se présente sous forme d'un fil, est guidé dans une rainure 14 depuis son emplacement de fixation sur le volet inférieur 5 jusqu'au bord inférieur du volet inférieur 5.

La tablette de masquage selon l'invention permet donc à son utilisateur de couvrir une cavité derrière un siège devant le coffre soit dans la position d'utilisation du siège soit dans une position escamotée du dossier du siège puisque la longueur de la tablette de masquage s'adapte automatiquement dans ces deux cas aux distances différentes entre l'endroit de fixation de la tablette sur le dossier 3 et l'extrémité frontale du plancher du coffre. Ceci est rendu possible grâce aux deux axes de pivot prévus sur le volet inférieur 5.

## Revendications

1. Tablette de masquage (1) pour masquer une cavité (15) à l'arrière d'un siège (2) d'un véhicule automobile pour assurer la continuité du plancher de coffre, positionnée contre le dossier (3) du siège (2) pendant sa non-utilisation, la tablette comprenant un volet supérieur (4) qui est relié à un volet inférieur (5) par le biais d'une première charnière (6) formant un axe horizontal, le volet inférieur étant relié au carter (7) du siège (2) également par une deuxième charnière (8) formant un second axe horizontal, ledit volet inférieur (5) étant immobilisé contre le dossier (3) du siège (2) par des moyens de retenue (9, 10, 11) lorsque le siège (2) est en position d'utilisation et est libéré lorsque le siège (2) est en position escamotée, **caractérisée en ce que** les moyens de retenue (9, 10, 11) du volet inférieur (5) comprennent au moins un lien souple (9), non extensible, fixé par une extrémité au carter du siège (7), passant par un trou (11) dans la paroi arrière à la hauteur du volet inférieur (5) à travers le dossier (3) du siège (2) et étant fixé par son autre extrémité au volet inférieur (5).

2. Tablette de masquage selon la revendication 1, **caractérisée en ce que** le lien est un câble ou un fil (9) et l'emplacement de sa fixation sur le carter (7) est choisi de telle sorte que lorsque le dossier (3) du siège (2) est escamoté, sa longueur est suffisamment grande pour permettre au volet inférieur (5) de pivoter autour de l'axe de sa deuxième charnière (8) jusqu'à ce qu'il atteigne une position où il repose sur la paroi arrière du dossier (3).

3. Tablette de masquage selon la revendication 2, **caractérisée en ce que** le carter (7) du dossier comprend deux carters (7a, 7b) de glissière mobile, chacun de ces deux carters (7a, 7b) est pourvu d'un moyen de retenue (9, 10, 11) du volet inférieur (5).

4. Tablette de masquage selon l'une des revendications précédentes, **caractérisée en ce que** les charnières (6, 8) sont constituées par des bandes en textile.

5. Tablette de masquage selon la revendication 4, **caractérisée en ce que** les volets (4, 5) sont recouverts par une moquette (12), formant elle- même les charnières (6, 8).

6. Tablette de masquage selon l'une des revendications précédentes, **caractérisée en ce que** le volet supérieur (4) est fixé en position de non-utilisation sur le dossier (3) du siège (2) par une gâche (13).

7. Tablette de masquage selon l'une des revendications 1 à 6, **caractérisée en ce que** le au moins un lien (9) souple est fixé près du bord supérieur du volet inférieur (5) à celui-ci et une rainure (14) partant de l'emplacement de fixation et s'étendant jusqu'au bord opposé du volet inférieur (3) est prévue pour loger une partie du lien lorsque les deux volets (4, 5) sont rabaissés.

8. Tablette de masquage selon l'une des revendications précédentes, **caractérisée en ce que** la hauteur du volet inférieur (5) est déterminée afin que la première charnière (6) repose sur une extrémité du dossier (3) lorsqu'il est escamoté.

9. Tablette de masquage selon l'une des revendications précédentes, **caractérisée en ce que** la longueur du volet inférieur (5) est déterminée afin que le volet supérieur (4) repose à plat sur le plancher du coffre.

## Claims

1. Masking panel (1) for masking a cavity (15) at the rear of a seat (2) of a motor vehicle in order to provide continuity of the boot floor positioned against the backrest (3) of the seat (2) during non-use thereof, the panel comprising a top flap (4) that is connected to a bottom flap (5) by means of a first hinge (6) forming a horizontal axis, the bottom flap being connected to the casing (7) of the seat (2) also by a second hinge (8) forming a second horizontal axis, said bottom flap (5) being immobilised against the backrest (3) of the seat (2) by holding means (9, 10, 11) when the seat (2) is in the position of use and is released when the seat (2) is in the retracted position, **characterised in that** the means (9, 10, 11) of holding the bottom flap (5) comprise at least one non-extensible flexible link (9) fixed by one end to the casing of the seat (7), passing through a hole (11) in the rear wall at the height of the bottom flap (5) through the backrest (3) of the seat (2) and being fixed by its other end to the bottom flap (5).

2. Masking panel according to claim 1, **characterised in that** the link is a cable or wire (9) and the position of the fixing thereof to the casing (7) is chosen so that, when the backrest (3) of the seat (2) is retracted, its length is sufficiently great to enable the bottom flap (5) to pivot about the axis of its second hinge (8) until it reaches a position in which it rests on the rear wall of the backrest (3).

3. Masking panel according to claim 2, **characterised in that** the casing (7) of the backrest comprises two movable-runner casings (7a, 7b) each of these two casings (7a, 7b) is provided with a means (9, 10, 11) of holding the bottom flap (5).

4. Masking panel according to one of the preceding claims, **characterised in that** the hinges (6, 8) are formed by textile strips.

5. Masking panel according to claim 4, **characterised in that** the flaps (4, 5) are covered by a carpet (12), itself forming the hinges (6, 8).

6. Masking panel according to one of the preceding claims, **characterised in that** the top flap (4) is fixed in the non-use position on the backrest (3) of the seat (2) by a catch (13).

7. Masking panel according to one of claims 1 to 6, **characterised in that** the at least one flexible link (9) is fixed close to the top edge of the bottom flap (5) to the latter and a groove (14) starting from the fixing location and extending as far the opposite edge of the bottom flap (3) is provided for housing a part of the link when the two flaps (4, 5) are lowered.

8. Masking panel according to one of the preceding claims, **characterised in that** the height of the bottom flap (5) is determined so that the first hinge (6) rests on one end of the backrest (3) when it is retracted.

9. Masking panel according to one of the preceding claims, **characterised in that** the length of the bottom flap (5) is determined so that the top flap (4) rests flat on the floor of the boot.

## Patentansprüche

1. Abdeckplatte (1) zum Abdecken einer Vertiefung (15) hinter einem Sitz (2) eines Kraftfahrzeuges, zur Gewährleistung der Durchgängigkeit des Kofferraumbodens, die an der Rückenlehne (3) des Sitzes (2) positioniert wird, solange sie nicht in Verwendung ist, wobei die Platte einen oberen Flügel (4) umfasst, der durch ein erstes Scharnier (6), das eine waagrechte Achse bildet, mit einem unteren Flügel (5) verbunden ist, und der untere Flügel ebenfalls durch ein zweites Scharnier (8), das eine zweite waagrechte Achse bildet, mit dem Gehäuse (7) des Sitzes (2) verbunden ist, und der besagte untere Flügel (5) durch Haltevorrichtungen (9, 10, 11) an der Rückenlehne (3) des Sitzes (2) blockiert wird, wenn sich der Sitz (2) in der Nutzstellung befindet, und freigegeben wird, wenn sich der Sitz (2) in der eingeklappten Stellung befindet, **dadurch gekennzeichnet, dass** die Haltevorrichtungen (9, 10, 11) des unteren Flügels (5) zumindest eine flexible Verbindung (9) umfassen, die nicht dehnbar, und an einem Ende mit dem Gehäuse des Sitzes (7) befestigt ist, und durch eine Öffnung (11) in der Rückwand auf Höhe des unteren Flügels (5) durch die Rückenlehne (3) des Sitzes (2) führt, und an seinem anderen Ende am unteren Flügel (5) befestigt ist.

2. Abdeckplatte nach Anspruch 1, **dadurch gekennzeichnet, dass** die Verbindung ein Kabel oder eine Schnur (9) ist, und die Befestigungsstelle am Gehäuse (7) so ausgewählt wird, dass, wenn die Rückenlehne (3) des Sitzes (2) eingeklappt ist, eine ausreichende Länge vorhanden ist, damit der untere Flügel (5) um die Achse seines zweiten Scharniers (8) schwenken kann, bis er eine Position erreicht, in der er auf der Rückwand der Rückenlehne (3) aufliegt.

3. Abdeckplatte nach Anspruch 2, **dadurch gekennzeichnet, dass** das Gehäuse (7) der Rückenlehne zwei Gehäuse (7a, 7b) einer mobilen Gleitschiene umfasst, und jedes dieser beiden Gehäuse (7a, 7b) mit einer Haltevorrichtung (9, 10, 11) für den unteren Flügel (5) versehen ist.

4. Abdeckplatte nach einem der vorherigen Ansprüche, **dadurch gekennzeichnet, dass** die Scharniere (6, 8) aus Textilbändern gefertigt sind.

5. Abdeckplatte nach Anspruch 4, **dadurch gekennzeichnet, dass** die Flügel (4, 5) mit einem Spannteppich (12) überzogen sind, der wiederum selbst die Scharniere (6, 8) bildet.

6. Abdeckplatte nach einem der vorherigen Ansprüche, **dadurch gekennzeichnet, dass** der obere Flügel (4) in der nicht verwendeten Position mittels Schließhaken (13) auf der Rückenlehne (3) des Sitzes (2) befestigt ist.

7. Abdeckplatte nach einem der Ansprüche 1 bis 6, **dadurch gekennzeichnet, dass** die zumindest eine flexible Verbindung (9) nahe dem oberen Rand des unteren Flügels (5) mit diesem verbunden ist, und eine Nut (14), die von der Befestigungsstelle ausgeht, und sich bis zum gegenüber liegenden Rand des unteren Flügels (3) erstreckt, vorgesehen ist, um einen Teil der Verbindung aufzunehmen, wenn die beiden Flügel (4, 5) eingeklappt sind.

8. Abdeckplatte nach einem der vorherigen Ansprüche, **dadurch gekennzeichnet, dass** die Höhe des unteren Flügels (5) festgelegt wird, damit das erste Scharnier (6) auf einem Ende der Rücklehne (3) aufliegt, wenn diese eingeklappt ist.

9. Abdeckplatte nach einem der vorherigen Ansprüche, **dadurch gekennzeichnet, dass** die Länge des unteren Flügels (5) festgelegt wird, damit der obere Flügel (4) flach auf dem Boden des Kofferraums aufliegt.
